# EUROPEAN PATENT APPLICATION

(11) **EP 2 129 072 A1**
(43) Date of publication of application: **02.12.2009**
(21) Application number: 08009555.7
(22) Date of filing: 26.05.2008
(51) Int. Cl.: H04L 29/06, G06F 21/00

(54) **Automated generation of a user account for registered users of a communication network to access a server**

(71) Applicant: Vodafone Holding GmbH, 40213 Düsseldorf (DE)
(72) Inventor: Neil, Clavin, 40211 Düsseldorf (DE); German, Leon, 40219 Düsseldorf (DE)
(74) Representative: Jostarndt, Hans-Dieter

(57) **Abstract**

The invention relates to a method for carrying out communication between an execution unit (105) and at least one user equipment (101).

According to the invention the method is carried out in a way, that a user of the user equipment (101) is registered in a communication network, that a logical node of the communication network (102,103,104) sends information about the registration of the user to the execution unit (105) and requests the execution unit (105) to generate an account which allows the user to access at least one functionality of the execution unit (105).

The invention furthermore relates to a communication system for carrying out communication between a server and at least one user equipment.

The invention furthermore relates to a logical node, to the server and the user equipment.

## Description

### Technical field

The invention relates to a method and a communication system for carrying out communication between a server and at least one user equipment.

The invention furthermore relates to a logical node and to the server for carrying out the communication between the server and the user equipment.

### Background of the Invention

It is known to increase the functionality of user equipments, especially mobile user equipments as for example mobile telephones, by accessing information which is stored, transmitted or handled through a server, for example a content server.

This occurs for example through a platform for mobile communication systems of the third generation as it is described in the specification (TS 23.057 Version 6.20, September 2003) of the third generation partnership project (3GPP).

Accessing information from the server may include a download of content and/or other forms of accessing information stored, transmitted or handled at the server. Communication between the user equipment and the server is for example based on the hypertext transfer protocol (HTTP). According to this communication the user equipment sends a request (HTTP-request) of a desired application to the content server.

### Summary of the invention

It is an object of the present invention to allow for more efficient communication between a server and a user equipment.

The present invention proposes a concept for allowing a user to access a server operating in a communication system. In particular the invention relates to a method for carrying out communication between an execution unit and at least one user equipment.

According to the invention a user of the user equipment is registered in a communication network, that a logical node of the communication network sends information about the registration of the user to the execution unit and requests the execution unit to generate an account which allows the user to access at least one functionality of the execution unit.

The invention proposes an automatic generation of an account. Preferably the automatic generation of the account is based on information contained in a communication network. The communication network according to the invention is for example a telecommunication network, or another network which allows an exchange of data, for example a local computer network, an intranet or the internet.

The execution unit is for example a server or a service, which can for example be carried out at the server.

Neither the formulation "server" nor the formulation "service" should be interpreted as limiting the scope of the invention.

Especially the term "server" may for example relate to a single computing unit, to a main frame computer, to an array of computers or even to a programmable device capable of offering functionality to one or more users.

The term "service" should neither be understood as limiting the scope of the invention.

This implementation of the service may for example comprise services as for example online banking, data bases or social networks as for example Facebook.

A preferred embodiment of the invention relates especially to web based services, especially web based services which require a registration. However, the current invention may be used for a variety of accesses without regard to the properties of the network and access protocols relating the server and/or the service.

A preferred embodiment of the invention relates to a user equipment which supports an authentication. The user equipment operates as a client, which is capable of exchanging information with a logical node of a communication network and/or a server capable of performing services for authorized users.

A preferred embodiment of the invention includes an automatic generation of an account.

The generation of an account is preferably related to information which is stored in a logical node of a communication network.

Alternatively, respectively additionally it is possible, that the generation of the account is related to information stored in the user equipment (client).

According to a preferred embodiment of the invention the logical node of the communication network sends information about the registration of the user to an access server.

The access server sends the information about the registration of the user to the execution unit.

An advantage of this implementation of the invention is that it allows a highly trustable user-relation from the access server to the execution unit.

Preferred embodiments of the invention include a mechanism which allows an access of the user equipment, respectively the user utilizing the user equipment to a principally unlimited number of servers and/or services.

Examples of services which are accessible through the invention are computer programmes which require a user authentication. An example of such a server is an online banking programme or a data base to which only a limited access is granted by the operator of the data base.

A preferred embodiment of the method, the communication system, the logical node, the server and the user equipment is **characterized in, that** a user of the user equipment is registered in a communication network, that a logical node of the communication network sends information about the registration of the user to the execution unit and requests the execution unit to generate an account which allows the user to access at least one functionality of the execution unit.

A preferred embodiment of the method, the communication system, the logical node, the server and the user equipment is **characterized in, that** the account comprises a user name and/or a password.

A preferred embodiment of the method, the communication system, the logical node, the server and the user equipment is **characterized in, that** information about a relation between the user and the account stored and/or transmitted.

A preferred embodiment of the method, the communication system, the logical node, the server and the user equipment is **characterized in, that** the user equipment sends to a logical node of the communication network a request for an access to the execution unit, and that the logical node transfers information about the account related to the user of the user equipment to the execution unit.

A preferred embodiment of the method, the communication system, the logical node, the server and the user equipment is **characterized in, that** the information about the account is utilized for a decision about an access of the user equipment to the execution unit.

A preferred embodiment of the method, the communication system, the logical node, the server and the user equipment is **characterized in, that** the user equipment sends a request for an access to the execution unit, that the execution unit receives the request, that the execution unit sends a request to a logical node of the communication network and that the logical node transmits information about the account which is related to the user of the user equipment to the execution unit and that the execution unit makes a decision about an access to at least one of its functions with regard to the information about the account.

A preferred embodiment of the method, the communication system, the logical node, the server and the user equipment is **characterized in, that** an operator of the communication network issues a digital certificate with information about a registration of the user as registered user of the communication network.

A preferred embodiment of the method, the communication system, the logical node, the server and the user equipment is **characterized in, that** the digital certificate is stored in the logical node of the communication network.

A further preferred embodiment of the method, the communication system, the logical node, the server and the user equipment is **characterized in, that** at least some information exchanged between the server and the user equipment is stored at the logical node.

Preferably the logical node transmits information received from the server to the user equipment after having checked, that the user equipment is related to an authorized user of the communication network.

A preferred embodiment of the invention relates to a communication system for carrying out communication between an execution unit and at least one user equipment.

The communication system is **characterized in, that** it comprises a communication network which allows a registration of users of user equipments, the logical node of the communication network is capable of storing and/or sending information about the registration of the user to the execution unit.

According to a further aspect, the present invention suggests a device comprising processing means provided for executing the method according to one or several of the preceding claims.

In a specific embodiment the device is a mobile communication device.

These aforementioned and other aspects and advantages of the invention will be apparent from and elucidated with reference to the embodiments of the invention described herein after.

### Brief description of the drawings

Reference to preferred embodiments of the invention will be made by way of example to the accompanying drawings.

Fig. 1 shows a schematic overview of a communication system, wherein a mobile user equipment is connected through a network with a server.

Fig. 2 shows a schematic representation of sequences relating to an access of a user to a server according to a preferred embodiment of the invention.

Fig. 3 shows a schematic representation of sequences relating to an access of a user to a server according to a further embodiment of the invention.

Fig. 4 shows a schematic representation of sequences relating to an access of a user to a server according to a preferred embodiment of the invention.

### Detailed description of preferred embodiments of the invention

Reference in this application to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims,

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

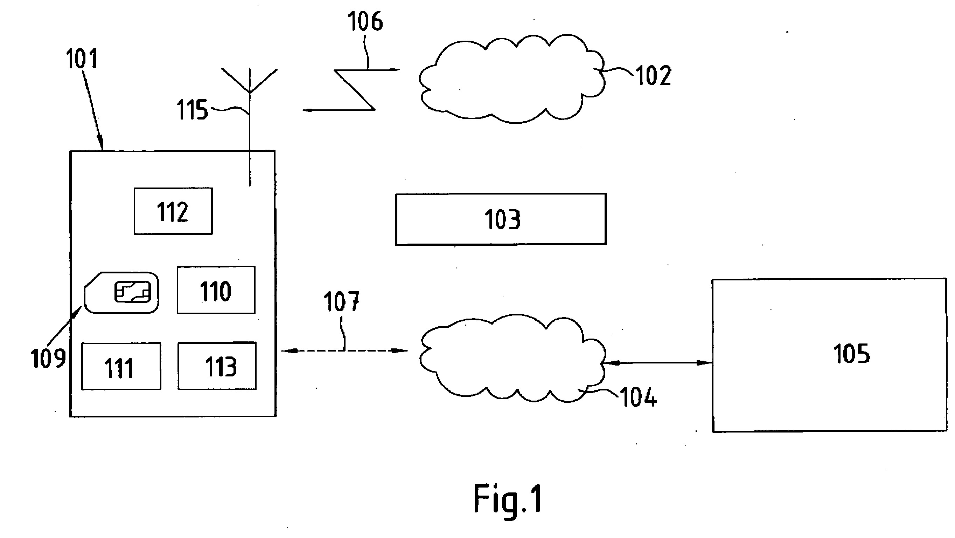

Fig. 1 shows a schematic representation of communication system and mobile user equipment according to the invention.

For those skilled in the art it is clear that the described functions are a selection of many means for carrying out the invention and implementing it.

Fig. 1 shows in a schematic overview a mobile user equipment 101. The mobile user equipment 101 is for example a mobile cellular telephone. The mobile user equipment 101 is connected with a server 105. Preferably an interactive connection between the mobile user equipment 101 and the server 105 is realized through a communication network. For example the network comprises a telecommunication network 102. The telecommunication network 102 relates the mobile user equipment through an air interface. The air interface 106 is for example a GSM network (GSM: Global System for Mobile Communications) or a UMTS network (UMTS: Universal Mobile Telecommunication System).

The telecommunication network 102 is connected through a gateway 103 with a data network 104. The data network 104 is for example the internet or an intranet. The server 105 is connected to the data network 104.

Information for registering the user equipment in the telecommunication network 102 is stored in the user identification module 109. The user identification module is for example supplied by an operator of the telecommunication network 102. The user identification module 109 is for example a chip card, which is in relation with GSM networks known as SIM card (SIM: Subscriber Identification Module).

In relation with UMTS networks the user identification module 109 is called USIM card (USIM: Universal Subscriber Identification Module). The preferably mobile user equipment 101 further comprises a processor 110, which is connected to the user identification module 109.

The user equipment 101 may comprise further elements, for example a keypad or a keyboard 111, a graphical user interface 112 and a storage 113. Preferably the storage 113 comprises permanent and non-permanent storage areas.

The user equipment 101 preferably contains an antenna 115, which physically allows a connection to the telecommunication network 102 over the air interface 106.

The server 105 is for example a content server which is operated by a content provider. The content can be downloaded through the network 102, 103, 104 into the user equipment 101.

The content is transferred as objects. Examples of these objects are all types of data sets, as for example text data, graphical information as photographs or films as well as program modules. The program modules may be executable, especially executable on the user equipment 101 or in relation to the user equipment 101.

The server 105 is preferably operated by a content provider, which uses the server for making the content available.

Preferably the content is available over the network 102, 103, 104.

According to a preferred embodiment the user equipment 101 may download the content from the server 105 by using the network 102, 103, 104.

The above mentioned program modules may have the format of program code for software applications. These software applications are executable by the user equipment 101, especially with a utilization of an application runtime environment.

If HTTP is used for carrying out requests, a demand for content, respectively for objects with embedded content is generated, HTTP requests are generated with a request header and a data area. The data area contains especially Information specific content (information) which is requested.

The request header especially contains information about the configuration of the user equipment 101.

It is preferable that the requests for obtaining content (objects) from the server are related with identification data. The identification data may be contained in the header of the request.

The invention can be implemented with various communication systems, user equipments, servers, networks operating them and with a variety of operating parameters.

These parameters can be adapted in order to allow a flexible access of the user equipment the execution unit 105.

Preferred embodiments relate to an access of plurality of user equipments 101 to one execution unit 105 or to more than one execution unit 105, especially to a plurality of execution units 105.

A plurality of solutions exists to implement communication protocols on suitable networks, especially common operator networks.

Afterwards three especially preferred solutions to implement the communication protocol on common operator networks (where common is using the default browsing APN, which usually only gives access to the external servers through the Wap Gateway (GW), and only via HTTP or HTTPS proxying) are described:
1. Connect the server inside the OpCo's network and have the terminal talk HTTP directly to the server. This will fail in most cases like e.g. Java J2ME applications, because for example the Wap GW (HTTP proxy) setting is defined by the mobile platform and the application can't decide itself to not use the Wap GW for some particular requests. This would also require changes on the OpCo's firewalls, to give direct access from the terminal to the server, without going through the Wap GW.
2. Connect the server inside the OpCo's network, and have a direct socket connection, by passing the HTTP stack. This would mean reimplementing the HTTP stack on Java clients, and having a non-standard port on the server side. The Java security model forbids HTTP connections to non-standard ports (HTTP=80, HTTPS=44.3) and uses the default Wap GW mobile platform settings. Direct socket connection might also not be fully supported by the device. This would also require changes on the OpCo's firewalls, to give direct access from the terminal to the server, without going through the Wap GW.
3. Use HTTPS over the Wap GW. The HTTPS proxy standard allows a direct connection between the client and the server, using the proxy as a simple socket proxy, and letting the traffic flow directly from one point to the other. This allows the proposed "Multipart Streaming" protocol to work in all common OpCo's "browsing" APN configurations without any changes on the OpCo. The only concern might be in regards to Wap GW resources: if the service is used in a similar way as regular browsing, and it's not (almost) always on, and not used by all the customer bases at the same time, the load on the Wap GW would be similar to regular browsing (or even less, due to the optimization and the single connection). If the service has a much bigger usage than regular browsing, option 2 should be carefully thought.

A variety of standards can be used for carrying out data transfer according to the invention.

A preferred embodiment of the data transfer uses the standard "multipart-mixed" (RFC 2046, RFC 2387) format to deliver each piece of content.
The application on the mobile receives the incoming multipart streaming content, and processes each part as soon as the whole part is received.

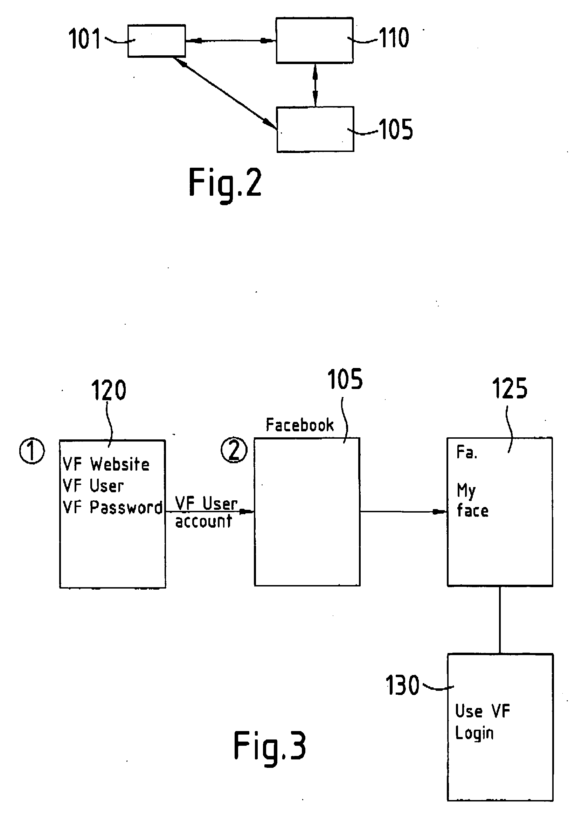

Fig. 2 shows a schematic representation of sequences relating to an access of a user equipment 101 to the execution unit (105).

The user equipment 101 may be any device which can be handled by a user, It is for example a communication device as described beforehand according to fig, 1. However, the user equipment 101 may be also another device, as for example a desk top computer or a notebook.

Fig. 2 contains an integration of an access server 110. The access server 110 is for example an embodiment of the logical node described beforehand.

However, it is also possible, that the access server 110 is a separate device, for example a server in a data network. In this case it is preferred, that the access server 110 is connected to the logical node of the communication network.

This implementation has the advantage, that the access server may check an authentication and/or an identity of a user of the user equipment with regard to information stored in the logical node. With regard to this embodiment of the invention a preferred method for carrying out communication is performed in that the user of the user equipment 101 registers in a communication network, that a logical node of the communication network 102, 103, 104 stores and/or sends information about a registration of the user to the access server 110.

This implementation makes it clear for those skilled in the art, that the scope of the invention relates to embodiments, wherein the logical node directly sends information about the registration of the user to the execution unit 105 as well as embodiments, wherein the logical node sends the information about the registration of the user to the execution unit 105 through one or furthermore devices.

A preferred embodiment of such a further device is an access server. Embodiment of this access server are described by way of example according to the figures 2, 3 and 4.

Fig. 3 shows a schematic representation of sequences relating to a preferred embodiment for an access of a user equipment 101 to an execution unit 105.

The user equipment 105 connects through a suitable connecting mechanism, for example with using a log in procedure to an access server 120. The access server 120 is according to this embodiment of this invention designed as a web server, which makes a website available to the user of the user equipment 101.

Access to this website is for example allowed through a user identification, for example with a user name, a user identify module, for example a SIM card or a USIM card.

Preferably a password is required to allow an access to the access server.

The access server 120 transmits information about the user account to the execution unit 105. The execution unit 105 is preferably a server capable of performing web services.

However, for those skilled in the art it is clear, that further embodiments of the user equipment 105 can also be realized with regard to the invention. For example it is possible to allow an access to a production site a household device or any other device capable of receiving information.

With regard to the transferred user account information - referred to as VF user account in the description - the execution unit 105 performs services with regard to information about an account for accessing the execution unit.

The account for accessing the execution unit 105 is preferably based on information about an account of the user in the communication network.

According to the account information related to the execution unit 105, the execution unit 105 creates information/services specific to the user account relating to the execution unit.

For example the execution unit 105 is a server of a social network, as for example Facebook. In this case the execution unit 105 creates a certain user profile 115 based on the account information stored in the execution unit 105.

Preferably the account information related to the execution unit 105 is related to the account information of the user in the communication network.

The information about the registration of the user as registered user of the communication network is stored in the logical node and/or the server of the communication network. This information is used to create a login file 130 which allows access of the user to the execution unit 105.

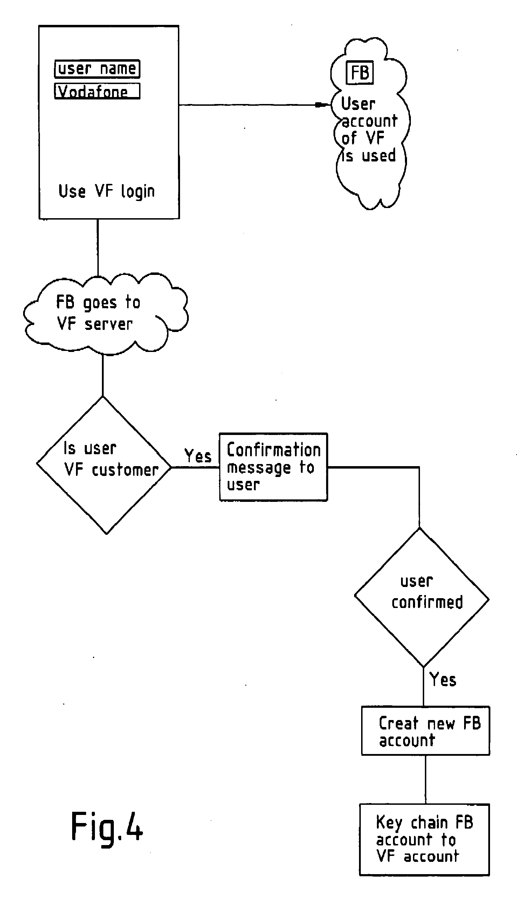

Fig. 4 shows a further preferred embodiment of the invention.

Fig. 4 relates to an implementation of the invention, wherein a user logs in at an execution unit FB. In this case the execution unit FB is equipped in a way, that it allows an access of a user to services provided by the execution unit FB.

This embodiment of the invention contains several implementations which allow an information of the execution unit FB, that the account information for accessing the execution unit FB should be based on a registration of the user in a communication network.

For example the user and/or the user equipment 100 may transmit information identifying the network operator to the execution unit FB.

If the network operator Is for example called Vodafone, the user name "Vodafone" is transmitted to the execution unit FB.

In this case the execution FB obtains the information, that account information relating to the user and/or the user equipment 101 are stored in a logical node of the communication network operated by the communication network operator called "Vodafone".

According to the embodiment presented in Fig. 4 the user equipment FB access to a server connected to the communication network through the user equipment.

However, it is included into the scope of the invention, that the execution unit FB may contact the server of the communication network in different ways, for example with a direct access.

Preferably before a first generation of a user account at the execution unit based on registration information of the user and/or the user equipment 101 to the communication network, a secure collection between the execution unit FB and a server of the communication network and/or additionally or alternatively directly to the logical node of the communication network has been installed.

After the execution unit 105 has accessed a server of the communication network, for example the VF server represented in fig. 4.

The server of the communication network and/or the logical node of the communication network check, if the user is registered for accessing the communication network. This implies a check, whether the user is a registered user of the communication network.

In the case, that the user is registered as user of the communication network - this user is called in fig. 4 Vodafone (VF) customer - a confirmation message is sent to the user (the VF customer).

This confirmation message allows a confirmation of the user.

In the case, that the user is confirmed by the server of the communication network and/or the logical node of the communication network, the execution unit FB is informed, that the user is a confirmed user of the communication network.

According to a preferred embodiment this user confirmation is performed in that the confirmation message is transmitted to the execution unit FB.

However, for those skilled in the art it is obvious that alternative means are included in the scope of the invention. Especially cases are included, where the logical node of the communication network and/or the server of the communication network send information about the registration of the user as registered user of the communication network directly to the execution unit FB.

Based on the information about the user in the communication network, the execution unit FB creates an account for accessing the execution unit FB.

For those skilled in the art, it is obvious, that different accounts with a variety of access possibilities can be created.

It is in the scope of the invention, that various types of execution units 105 can utilize the processes described herein.

Descriptions of the user equipment with reference to the reference numerals 105 and FB are therefore only, examples of embodiments.

Preferably a key chain between the account of the user for accessing the execution unit FB and the account (registration) of the user as registered user of the communication network is established.

According to a preferred embodiment of the invention, this key chain is realized in that the execution unit FB accesses the server and/or the logical node relating to the communication network in order to verify, that the user is a registered user of the communication network.

Based on the information about the user in the communication network, the unit FB creates an account for accessing the execution unit FB.

According to a preferred embodiment of the invention, the execution unit automatically creates a username for the user.

The username can be created randomly.

It is furthermore possible to base the usemame on information received from the communication network.

According to a preferred embodiment of the invention, the execution unit automatically creates a password for the user.

The password can be created randomly.

Preferably the usemame and the password are key chained - i.e. related through the key chain - to the VF login and password. This process can hidden from the user

According to a preferred embodiment of the invention, the key chain contains further information.

In one embodiment, the key chain verifies, that the user is a registered user of the communication network.

According to a further embodiment of the invention, the key chain confirms to the execution unit, that the user has a certain user identity. In this case preferably user identification information is transmitted.

Alternatively it is possible, that connecting information which allows relating an account created at the execution unit FB is exchanged between the execution unit and/or the server and respectively the logical node of the communication network.

This has the advantage, that implementations can be realized, wherein the execution unit obtains the information, that a user is authorized as user of the execution unit and identical to the user to whom the account information relates to.

Information about a relation between the account of the user for accessing the execution unit FB is preferably stored in the logical node and/or the server of the communication network.

As the logical node and the server of the communication network may be realized in various installations, it is of course included within the scope of the invention, that the server of the communication network and the logical node are identically and/or closely related to each other.

### List of reference numerals

- 101: user equipment
- 102: telecommunication network
- 103: gateway
- 104: data network
- 105: server, execution unit
- 106: air interface
- 109: user identification module
- 110: processor, access server
- 111: keyboard
- 112: graphical user interface
- 113: storage
- 115: antenna
- 120: access server
- 130: login file

## Claims

1. Method for carrying out communication between an execution unit (105) and at least one user equipment (101),
**characterized in,**
**that** a user of the user equipment (101) is registered in a communication network, that a logical node of the communication network (102,103,104) sends information about the registration of the user to the execution unit (105) and requests the execution unit (105) to generate an account which allows the user to access at least one functionality of the execution unit (105).

2. The method according to claim 1,
**characterized in,**
**that** the account comprises a user name and/or a password.

3. The method according to any of the preceding claims,
**characterized in,**
**that** information about a relation between the user and the account is sent to the execution unit (105).

4. The method according to any of the preceding claims,
**characterized in,**
**that** the user equipment (101) sends to a logical node of the communication network (102, 103, 104) a request for an access to the execution unit (105), and that the logical node transfers information about the account related to the user of the user equipment (101) to the execution unit (105).

5. The method according to claim 3,
**characterized in,**
**that** the information about the account is utilized for a decision about an access of the user equipment (101) to the execution unit (105).

6. The method according to any of the preceding claims,
**characterized in,**
**that** the user equipment sends a request for an access to the execution unit (105), that the execution unit (105) receives the request, that the execution unit (105) sends a request to a logical node of the communication network (102, 103, 104) and that the logical node transmits information about the account which is related to the user of the user equipment (101) to the execution unit (105) and that the execution unit (105) makes a decision about an access to at least one of its functions with regard to the information about the account.

7. The method according to any of the preceding claims,
**characterized in,**
**that** an operator of the communication network (102, 103, 104) issues a digital certificate with information about a registration of the user as registered user of the communication network (102, 103, 104).

8. The method according to claim 7,
**characterized in,**
**that** the digital certificate is stored in the logical node of the communication network (102, 103, 104).

9. The method to any of the preceding claims,
**characterized in,**
**that** at least some information exchanged between the server (105) and the user equipment (101) is stored at the logical node.

10. The method according to claim 9,
**characterized in,**
**that** the logical node transmits information received from the server (105) to the user equipment (101) after having checked, that the user equipment (101) is related to an authorized user of the communication network (102, 103, 104).

11. The method according to any of the preceding claims,
**characterized in,**
**that** the logical node of the communication network (102, 103, 104) sends information about the registration of the user to an access server (110) and that the access server (110) sends the information about the registration of the user to the execution unit (105).

12. Communication system for carrying out communication between an execution unit (105) and at least one user equipment (101),
**characterized in,**
**that** it comprises a communication network (102, 103, 104) which allows a registration of users of user equipments (101), that logical node of the communication network (102, 103, 104) is capable of storing and/or sending information about the registration of the user to the execution unit (105).

13. Logical node, capable of communicating in a communication network (102, 103, 104),
**characterized in,**
**that** it contains information about a registration of a user as registered user of the communication network and that the logical node is capable of sending the information about the registration of the user to an execution unit (105).

14. The logical node according to claim 13,
**characterized in,**
**that** it is capable of sending the information about the registration of the user to an access server (110) which is connected to the execution unit (105).

## Amended claims

### Amended claims in accordance with Rule 137(2) EPC.

**1.** Method for carrying out communication between an execution unit (105) and at least one user equipment (101),
**characterized in,**
**that** a user of the user equipment (101) is registered in a communication network, that a logical node of the communication network (102,103, 104) sends information about the registration of the user to the execution unit (105) and requests the execution unit (105) to generate an account which allows the user to access at least one functionality of the execution unit (105) using a SIM card of the user as a user identification module (109).

**2.** The method according to claim 1,
**characterized in,**
**that** the account comprises a user name and/or a password.

**3.** The method according to any of the preceding claims,
**characterized in,**
**that** information about a relation between the user and the account is sent to the execution unit (105).

**4.** The method according to any of the preceding claims,
**characterized in,**
**that** the user equipment (101) sends to a logical node of the communication network (102, 103, 104) a request for an access to the execution unit (105), and
**that** the logical node transfers information about the account related to the user of the user equipment (101) to the execution unit (105).

**5.** The method according to claim 3,
**characterized in,**
**that** the information about the account is utilized for a decision about an access of the user equipment (101) to the execution unit (105).

**6.** The method according to any of the preceding claims,
**characterized in,**
**that** the user equipment sends a request for an access to the execution unit (105), that the execution unit (105) receives the request, that the execution unit (105) sends a request to a logical node of the communication network (102, 103, 104) and that the logical node transmits information about the account which is related to the user of the user equipment (101) to the execution unit (105) and that the execution unit (105) makes a decision about an access to at least one of its functions with regard to the information about the account.

**7.** The method according to any of the preceding claims,
**characterized in,**
**that** an operator of the communication network (102, 103, 104) issues a digital certificate with information about a registration of the user as registered user of the communication network (102, 103, 104).

**8.** The method according to claim 7,
**characterized in,**
**that** the digital certificate is stored in the logical node of the communication network (102, 103, 104).

**9.** The method according to any of the preceding claims,
**characterized in,**
**that** at least some information exchanged between the execution unit (105) and the user equipment (101) is stored at the logical node.

**10.** The method according to claim 9,
**characterized in,**
**that** the logical node transmits information received from the execution unit (105) to the user equipment (101) after having checked, that the user equipment (101) is related to an authorized user of the communication network (102, 103, 104).

**11.** The method according to any of the preceding claims,
**characterized in,**
**that** the logical node of the communication network (102, 103, 104) sends information about the registration of the user to an access server (110) and that the access server (110) sends information about the registration of the user to the execution unit (105).

**12.** Communication system for carrying out communication between an execution unit (105) and at least one user equipment (101),
**characterized in,**
**that** it comprises a communication network (102, 103, 104) which allows a registration of users of user equipments (101) using information stored in a SIM card as a user identification module (109), that a logical node of the communication network (102, 103, 104) is capable of storing information about the registration of the user and/or sending information about the registration of the user to the execution unit (105).

**13.** Server, capable of communicating in a communication network (102, 103, 104),
**characterized in,**
**that** it contains information about a registration of a user as registered user of the communication network and that the server is capable of sending the information about the registration of the user to an execution unit (105).

**14.** The server according to claim 13,
**characterized in,**
**that** it is capable of sending the information about the registration of the user to an access server (110) which is connected to the execution unit (105).
